# EUROPÄISCHE PATENTSCHRIFT

(11) **EP 0 748 030 B1**
(45) Veröffentlichungstag und Bekanntmachung des Hinweises auf die Patenterteilung: **15.03.2000**
(21) Anmeldenummer: 96810320.0
(22) Anmeldetag: 22.05.1996
(51) Int. Cl.: H02K 15/00

(54) **Vorrichtung zum Einpressen eines Nutverschlussstückes für rotierende elektrische Maschinen**
Device for inserting slot closure wedges for rotating electrical machines
Dispositif pour l'introduction de cales d'encoche pour machines électriques tournantes

(30) Priorität: 08.06.1995 DE 19520868
(43) Veröffentlichungstag der Anmeldung: 11.12.1996
(73) Patentinhaber: ASEA BROWN BOVERI AG, 5400 Baden (CH)
(72) Erfinder: Huber, Albert, 5103 Möriken (CH); Kech, Armin, Verstorben (CH); Kopp, Albert, 5200 Windisch (CH); Spielmann, Rainer, 5244 Birrhard (CH)

(56) Entgegenhaltungen:
- EP-A- 0 415 042
- EP-A- 0 482 229
- EP-A- 0 639 882
- CH-A- 525 581
- JP-A- 2 269 438
- US-A- 4 901 572

## Beschreibung

### TECHNISCHES GEBIET

Die Erfindung betrifft eine Vorrichtung zum Einpressen eines Nutverschlussstückes, wie sie im Oberbegriff des ersten Anspruchs beschrieben ist.

Eine solche Einrichtung zum Einpressen eines Nutverschlussstückes ist z.B. aus der CH 525 581 bekannt.

### STAND DER TECHNIK

Auf die in den Nuten elektrischer Maschinen angeordneten Leiterstäbe oder Spulen wirken unter der Wechselwirkung des die Leiter durchfliessenden elektrischen Stroms und des magnetischen Feldes im Luftspalt Kräfte wechselnder Richtung ein. Es ist daher notwendig, diese Leiter in den Nuten spielfrei festzulegen, was durch Verkeilung unter mechanischer Vorspannung erfolgen kann. Die wirkenden Wechselkräfte sind unter Umständen in der Lage, lose Stäbe oder Spulen in Eigenresonanz zu versetzen. Schon die geringste Möglichkeit, sich in den Nuten bewegen zu können, kann dazu führen, dass die Isolation der Spulen oder Stäbe beschädigt wird. Wenn sich dann das Spiel vergrössert, schreitet die Zerstörung der Isolation rasch fort. Aus diesem Grund müssen Stäbe bzw. Spulen in den Nuten seitlich und in der Höhe so festgesetzt werden, dass die wirkenden Wechselkräfte nicht zu einer Lockerung der Stäbe oder Spulen führen können. Die Kraft, die durch die Nutverschlussstücke auf die Stäbe oder Spulen ausgeübt wird, soll dabei kontrolliert in der gesamten Maschinenbohrung etwa gleich gross sein.

Anordnungen zur Festlegung der Leiterstäbe oder Spulen mittels Nutverschlussstücke in den Nuten elektrischer Maschinen sind bekannt. Bei den meisten Anordnungen dieser Art werden die Leiterstäbe bzw. Spulen durch aufgelegte Ausgleichsstreifen und trapez- oder schwalbenschwanzförmige Keile gegen den Nutengrund gedrückt.
Eine Einrichtung zum Festsetzen der trapez- oder schwalbenschwanzförmigen Keile ist bekannt aus der eingangs genannten CH 525 581. Hier drückt ein Stempel gegen die Stirnseite eines unteren Keils und presst diesen zwischen Ausgleichsstreifen und einen oberen Keil, der sich gegen Ausnehmungen im Blechpaket einer elektrischen Maschine abstützt. Der erwähnte Stempel ist mit einem Druckzylinder verbunden, welcher sich mittels Nocken beim Einpressvorgang der Keile in radialen Luftschlitzen der elektrischen Maschine abstützt.

Nachteilig wirkt sich bei dieser Einrichtung zum Festsetzen der trapez- oder schwalbenschwanzförmigen Keile unter anderem die unerwünschte Verschiebung der Keile in Maschinenlängsrichtung aus.
Weiterhin sind die radialen Kühlkanäle im Statorblechpaket einer rotierenden elektrischen Maschine nicht über die gesamte Maschinenlänge im gleichen Abstand zu den trapez-oder schwalbenschwanzförmigen Keilen angeordnet. Die an dem Druckzylinder im Abstand verschiebbar angeordneten Nocken müssen also den unterschiedlichen Abständen zwischen den Kühlkanälen und den Keilen angepasst werden.

Mit dem Einfahren der Nocken in die radialen Kühlkanäle des Statorblechpakets und der anschliessenden Kraftausübung auf Teilpakete des Statorblechpakets während des Verkeilvorgangs, kann die Isolierung zwischen einzelnen Blechsegmenten, aus denen das Statorblechpaket aufgebaut ist, mechanisch beschädigt werden. Eine elektrische Schädigung des Blechpakets durch das Auftreten von Wirbelströmen beim Betrieb der elektrischen Maschine ist dann die Folge der mechanischen Beschädigungen.

### DARSTELLUNG DER ERFINDUNG

Der Erfindung liegt die Aufgabe zugrunde, eine Vorrichtung zum Einpressen von Nutverschlussstücken, im folgenden Verkeilvorrichtung genannt, in den Nuten einer rotierenden elektrischen Maschinen der eingangs genannten Art dahingehend weiterzuentwickeln, dass sich die Verkeilvorrichtung während des Einpressvorgangs nicht gegen das Statorblechpaket abstützt, und dass die Nutverschlüsse nur an deren axialen Position in der Blechpaketnut verkeilt werden, und nicht in Maschinenlängsrichtung verschoben werden.

Erfindungsgemäss wird diese Aufgabe durch die Merkmale des ersten Anspruchs gelöst.

Durch die spezielle Ausführung der Verkeilvorrichtung werden die Nutverschlüsse ohne Krafteinwirkung von der Verkeilvorrichtung auf das Statorblechpaket kontrolliert gleichmässig in der gesamten Bohrung der Maschine festgesetzt.
Die Nutverschlüsse werden an deren axialen Maschinenlängsposition verkeilt, wobei es besonders vorteilhalft ist, wenn die Kraft, die durch das Verkeilen der Nutverschlüsse auf die Stab- oder Spulenisolation ausgeübt wird, grösser gewählt wird, als die Rüttelkraft im Betrieb der Maschine zuzüglich einer Zusatzkraft, die die Alterung der Wicklungsteile berücksichtigt.

Die Vorteile der Erfindung sind unter anderem darin zu sehen, dass die Bauhöhe der Verkeilvorrichtung so ausgelegt ist, dass sie in den Luftspalt zwischen Statorblechkörper und Rotorkörper einer rotierenden elektrischen Maschine ein- und durchgeführt werden kann.
Dadurch wird der Einsatz der Verkeilvorrichtung auch in periodisch zu Revisionszwecken abgestellten Maschinen möglich, wobei deren Rotor im Stator eingebaut bleibt. Ein sogenanntes Nachverkeilen bestehender Anlagen zeichnet sich besonders wegen der hohen Wirtschaftlichkeit aus, weil das zeitaufwendige Ausbauen des Rotors entfällt.

### KURZE BESCHREIBUNG DER ZEICHNUNG

In der Zeichnung ist ein Ausführungsbeispiel der Erfindung schematisch dargestellt.
Es zeigen:
- Fig. 1: einen Längsschnitt durch eine Verkeilvorrichtung;
- Fig. 2: eine Draufsicht auf die Verkeilvorrichtung, welche an einem Trägerrahmen befestigt ist;
- Fig. 3: einen Querschnitt durch die Verkeilvorrichtung nach der Linie III-III gemäss Fig. 2;
- Fig. 4: einen Längsschnitt durch die Verkeilvorrichtung nach der Linie IV-IV gemäss Fig. 2;
- Fig. 5: eine Seitenansicht eines oberen prismatischen Körpers eines Nutverschlussstücks;
- Fig. 6: eine Draufsicht auf den oberen prismatischen Körper des Nutverschlussstücks;
- Fig. 7: eine Seitenansicht eines unteren prismatischen Körpers des Nutverschlussstücks;
- Fig. 8: eine Ansicht einer im Luftspalt eines Turbogenerators mittels Seilzügen fahrbaren Verkeilvorrichtung;
- Fig. 9: eine Ansicht auf einen von zwei Trägersupporten, die auf Maschinenlüftern befestigt sind.

Es sind nur die für das Verständnis der Erfindung wesentlichen Elemente gezeigt. Nicht dargestellt sind von der Anlage beispielsweise die Kabelverbindungen einer Videoeinrichtung an ausserhalb einer elektrischen Maschine aufgestellten Bildschirmen. Weiterhin ist kein Druckleitungsanschluss an eine krafterzeugende Vorrichtung oder eine Hubeinrichtung dargestellt.

### WEG ZUR AUSFÜHRUNG DER ERFINDUNG

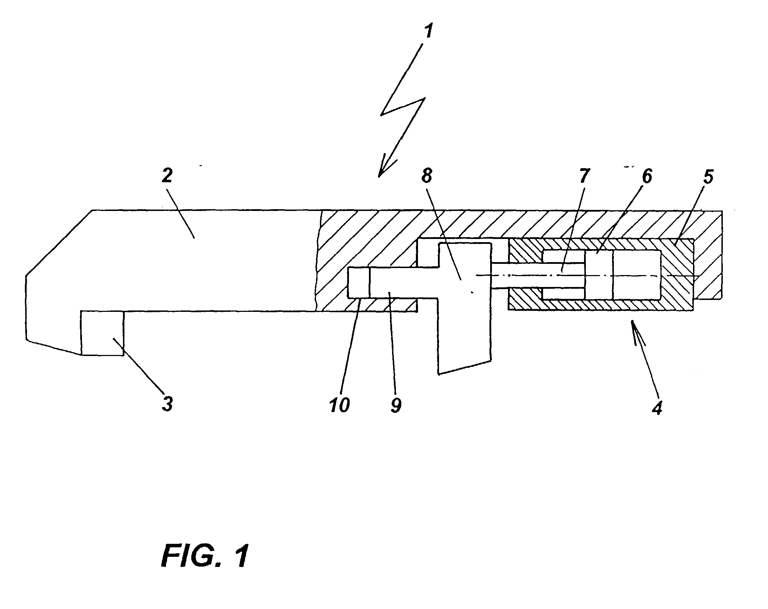

In Fig. 1 ist mit 1 allgemein die Verkeilvorrichtung bezeichnet. Diese Verkeilvorrichtung 1 besteht im wesentlichen aus einer Spannzange 2 mit einem Nocken 3 und einer krafterzeugenden Vorrichtung 4. Die krafterzeugende Vorrichtung 4 umfasst einen Druckzylinder 5, in welchem ein Kolben 6 hydraulisch betätigt wird. Dieser Kolben 6 ist über ein Gestänge 7 mit einem Stempel 8 verbunden, der mit einem Führungsstift 9 in einer Bohrung 10 der Spannzange 2 geführt ist.

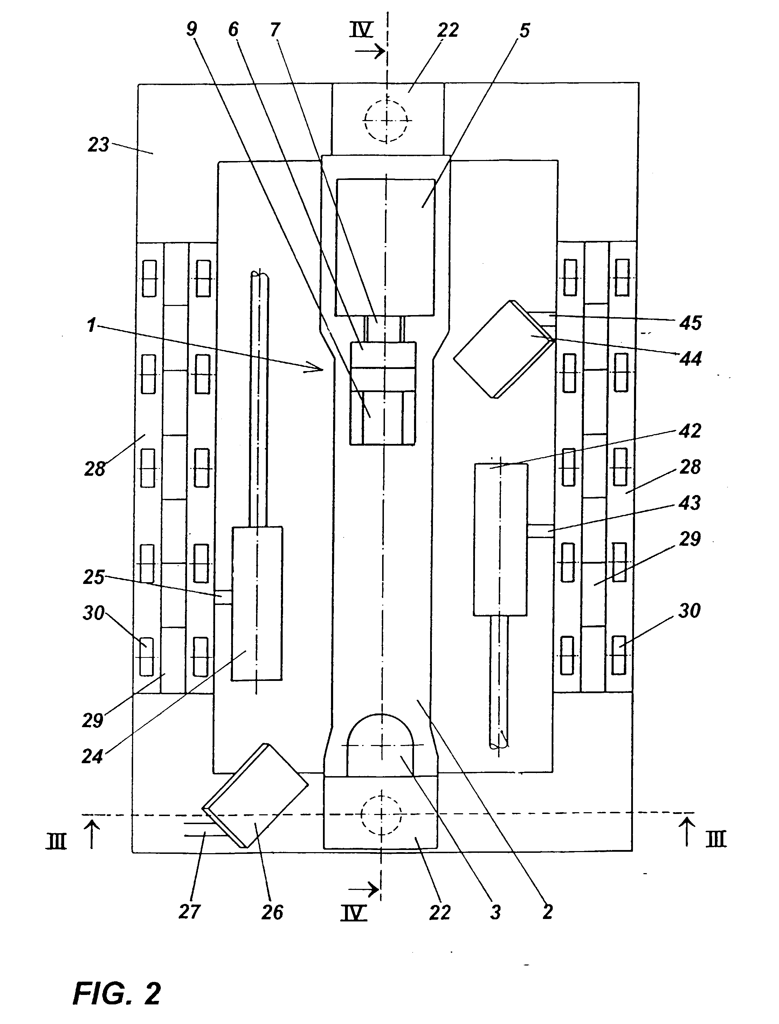

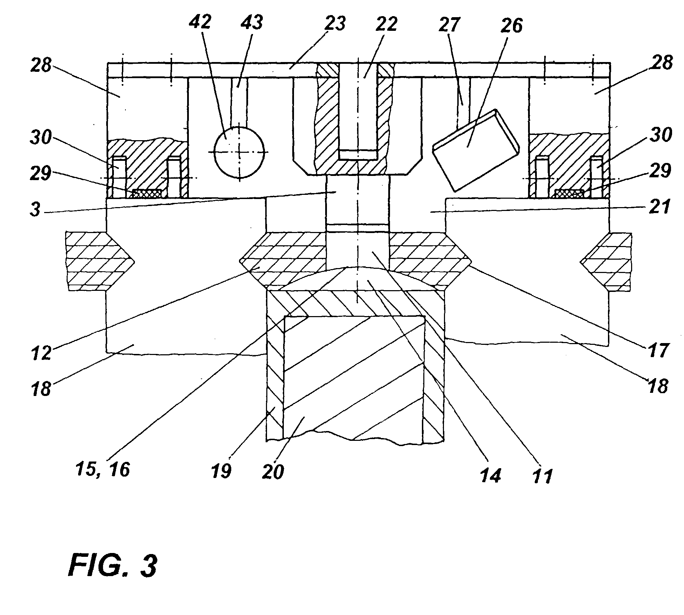

Wie Fig. 2 zeigt, ist die Verkeilvorrichtung 1 mit Hubvorrichtungen 22 an einem Trägerrahmen 23 beweglich angeordnet. Weiterhin sind an diesem Trägerrahmen 23 eine Videoausrüstung 24, 25, 26, 27, bzw. 42, 43, 44, 45, und fahrbare Magnetträger 28 angebracht. Die Videoausrüstung besteht aus zwei Kameras 24, 42 mit Kamerahalterungen 25, 43 und zwei Spiegeln 26, 44 mit Spiegelhalterungen 27, 45. Dabei ist die Kameras 24 mit einem Spiegel 26 so am Trägerrahmen 23 installiert, dass der Bereich um den Nocken 3 visuell erfassbar ist. Die zweite Kamera 42 mit einem Spiegel 44 ist so angebracht, dass der Bereich um den Stempel 8 erfasst wird. Wie Fig. 3 zeigt, sind an den fahrbaren Magnetträgern 28 (auch Fig. 2), im folgenden nur Magnetträger genannt, Permanentmagnete 29 und Rollen 30 so angeordnet, dass der Trägerrahmen 23 auf den Rollen 30 entlang eines Statorblechkörpers 18 fahrbar ist und dabei durch die Magnetkraft der Permanentmagnete 29 am Statorblechpaket 18 gehalten wird.

In einer Nut 21 des Statorblechpaketes 18 ist ein Leiterstab 20 mit Isolation 19 eingelegt, und die Nut 21 ist mittels einer Zunge 14 und einem schwalbenschwanzförmigen Nutkeil 12, der sich seitlich in Ausnehmungen 17 des Statorblechpakets 18 abstützt, verschlossen.

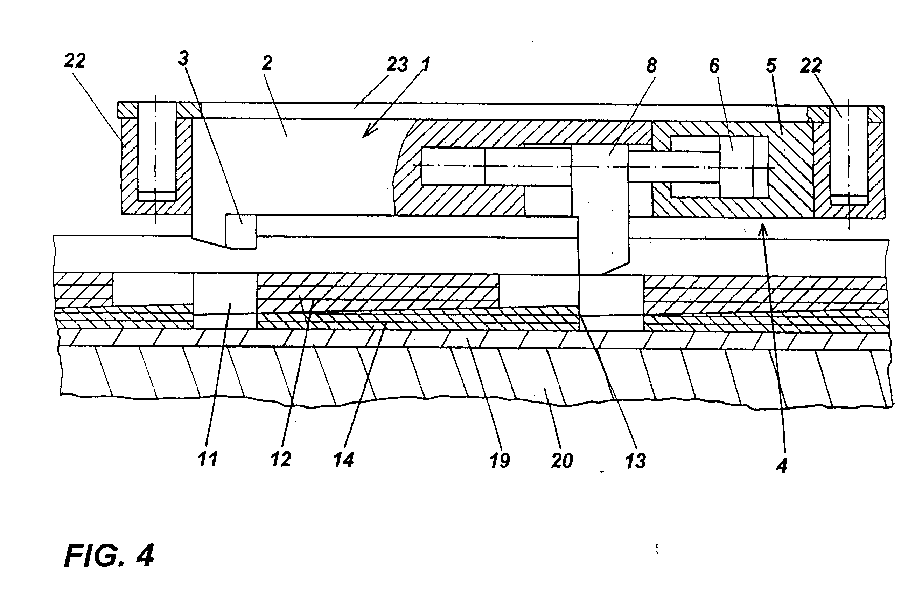

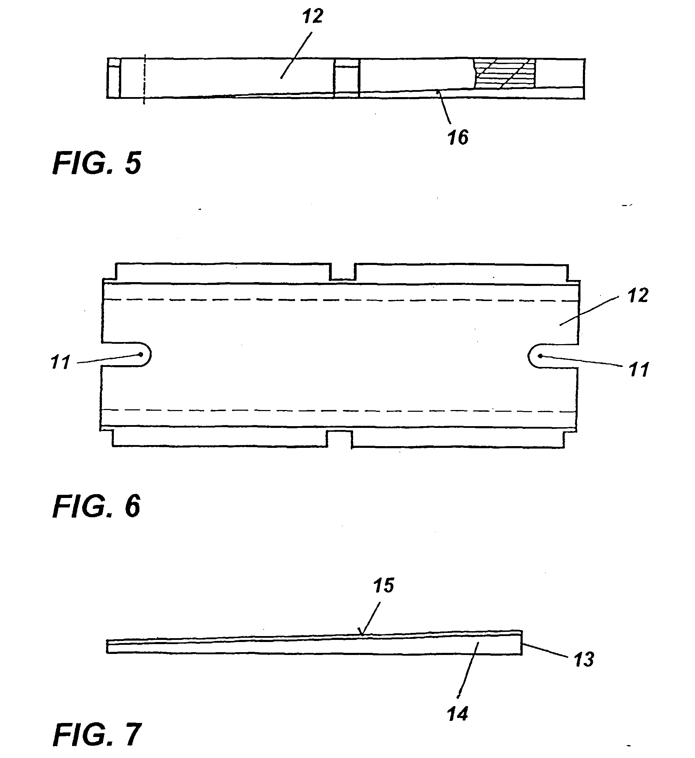

Fig. 4 zeigt die Verkeilvorrichtung 1, wie sie an einem Nutverschlussstück 12, 14 positioniert ist. Diese Nutverschlussstücke 12, 14 sind anhand der Fig. 5, 6 und 7 näher beschrieben. Der Nutkeil 12 weist an seiner Unterseite eine konkave Fläche 16 auf, und an den Stirnseiten axiale Schlitze 11. Die Zunge 14 hat an eine obere, im montierten Zustand der konkaven Fläche 16 des Nutkeils 12 zugewandte, konvexe Fläche 15. Die konvexe und konkave Flächen 15, 16 sind in Fig. 3 ersichtlich.

Die Funktion der Verkeilvorrichtung 1 wird anhand von Fig. 4 erläutert. Ist die Zange 2 mit dem Stempel 8 an einem Nutverschlussstück 12, 14 positioniert, wird mit den Hubvorrichtungen 22 die Verkeilvorrichtung 1 in Richtung Nutverschlussstück 12, 14 bewegt, wobei der Nocken 3 in den axialen Schlitz 11 des Nutkeils 12 gleitet, und der Stempel 8 an einer Stirnseite 13 der Zunge 14 angreift. Beim hydraulischen Betätigen des Kolbens 6 bewegen sich der Nocken 3 und der Stempel 8 in der Art einer Schraubzwinge aufeinander zu. Dabei wird die Zunge 14 unter den Nutkeil 12 geschoben, wodurch eine Kraft von der Zunge 14 auf die Isolation 19 des Leiterstabes 20 in Richtung Nutengrund wirkt. Diese Kraft ist grösser gewählt, als die Rüttelkraft im Betrieb der Maschine zuzüglich einer Zusatzkraft, die die Alterung der Wicklungsteile berücksichtigt.
In einer rotierenden elektrischen Maschine ist somit jeder Nutverschluss 12, 14 kontrolliert fixierbar.

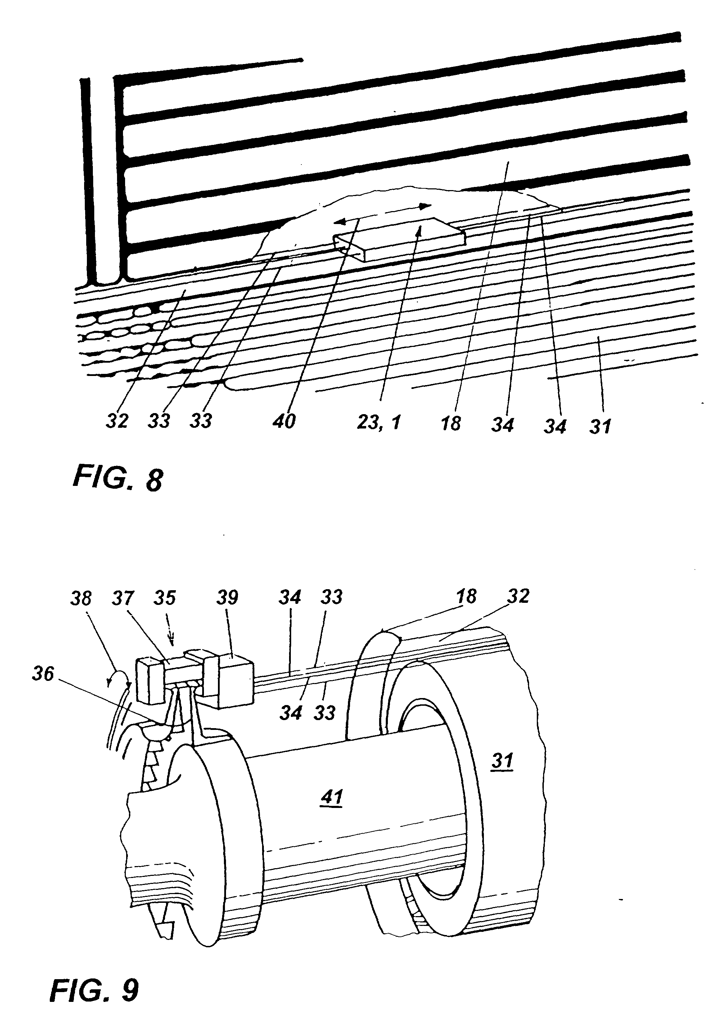

Fig. 8 zeigt einen Schnitt durch den Statorblechkörper 18 und den Rotorkörper 31 einer elektrischen Maschine mit dazwischenliegendem Luftspalt 32. In diesem Luftspalt 32 ist an Trägerseilen 33 der Trägerrahmen 23 mit Verkeilvorrichtung 1 angeordnet, der mit Zugseilen 34 in Maschinenlängsrichtung 40 verfahrbar ist. Beim Verfahren des Trägerrahmens 23 dient die Videoausrüstung 24, 25, 26, 27, wie sie in Fig. 2 gezeigt ist, der Positionierung der Verkeilvorrichtung 1 an Nutverschlüssen 12, 14. Die Videoausrüstung ist hierfür ausserhalb des Luftspalts 32 an nicht dargestellten Bildschirmen angeschlossen ist.

Die Tragseile 33 und die Zugseile 34 führen, wie in Fig. 9 dargestellt ist, auf beiden Seiten ausserhalb des Luftspaltes 32 zu je einem Trägersupport 35. Die Trägersupporte 35 sind auf je einem Radialventilator 36 angeordnet und umfassen eine Antriebseinrichtung 37 für die Bewegung 38 der Tragseile 33 in Umfangsrichtung und eine Antriebseinrichtung 39 für die Bewegung 40 der Verkeilvorrichtung 1 in Maschinenlängsrichtung.

Selbstverständlich ist die Erfindung nicht auf das gezeigte und beschriebene Ausführungsbeispiel beschränkt.

So ist beispielsweise eine krafterzeugende Vorrichtung in Form einer, mit einem elektrischen Antrieb kraftschlüssig verbundenen, Zahn- oder Gewindestange denkbar im Sinn der Erfindung.
Eine Anordnung der Trägersupporte 35 auf einem anderen, zur Welle 41 rotationssymmetrischen Maschinenelement oder auf der Welle selbst, ist ebenfalls erfindungsgemäss denkbar.

### BEZUGSZEICHENLISTE

- 1: Verkeilvorrichtung
- 2: Spannzange
- 3: Nocken
- 4: krafterzeugende Vorrichtung
- 5: Druckzylinder
- 6: Kolben
- 7: Gestänge
- 8: Stempel
- 9: Führungsstift
- 10: Bohrung
- 11: axialer Schlitz
- 12: Nutkeil
- 13: Stirnfläche von 14
- 14: Zunge
- 15: konvexe Fläche von 14
- 16: konkave Fläche von 12
- 17: Ausnehmung in 18
- 18: Statorblechkörper
- 19: Isolation
- 20: Leiterstab
- 21: Nut in 18
- 22: Hubvorrichtung
- 23: Trägerrahmen
- 24: Kamera
- 25: Kamerahalterung
- 26: Spiegel
- 27: Spiegelhalterung
- 28: fahrbarer Magnetträger
- 29: Permanentmagnet
- 30: Rolle
- 31: Rotorkörper
- 32: Luftspalt
- 33: Tragseil
- 34: Zugseil
- 35: Trägersupport
- 36: Radialventilator
- 37: Antriebsvorrichtung für Bewegung in Umfangsrichtung
- 38: Bewegung in Umfangsrichtung
- 39: Antriebsvorrichtung für Bewegung in Maschinenlängsrichtung
- 40: Bewegung in Maschinenlängsrichtung
- 41: Welle
- 42: Kamera
- 43: Kamerahalterung
- 44: Spiegel
- 45: Spiegelhalterung

## Patentansprüche

1. Vorrichtung (1) zum Einpressen von Nutverschlussstücken (12, 14) für in den Nuten (21) eines Eisenkörpers (18) einer elektrischen Maschine eingelegte Wicklungsstäbe (20), wobei ein Nutverschlussstück aus einem ersten, oberen prismatischen Körper (12), an dessen Unterseite eine Fläche (16) geneigt verläuft, und einem zweiten unteren prismatischen Körper (14) besteht, dessen obere, dem oberen Körper (12) zugewandte Fläche (15) gegenüber der Steigung der unteren Fläche (16) des oberen Körpers (12) parallel geneigt verläuft, wobei ein Stempel (8) an einer Stirnfläche (13) des zweiten prismatischen Körpers (14) angreift und mit einer krafterzeugenden Vorrichtung (4) in Verbindung steht,
dadurch gekennzeichnet,
dass die krafterzeugende Vorrichtung (4) in einer Spannzange (2) angeordnet ist, die mit einem Nocken (3) an dem ersten prismatischen Körper (12) angreift.

2. Vorrichtung (1) nach Anspruch 1,
dadurch gekennzeichnet,
dass die krafterzeugende Vorrichtung (4) aus einem Druckzylinder (6) mit einem hydraulisch oder pneumatisch betätigbaren Kolben (5) besteht, mit dessen Gestänge (7) der Stempel (8) verbunden ist.

3. Vorrichtung (1) nach Anspruch 1,
dadurch gekennzeichnet,
dass sie mittels einer Hubeinrichtung (22) mit einem Trägerrahmen (23) verbunden ist, und dass an dem Trägerrahmen (23) Lafetten (28) angeordnet sind, die mit Permanentmagneten (29) und Rollen (30) versehen sind.

4. Vorrichtung (1) nach Anspruch 3,
dadurch gekennzeichnet,
dass der Trägerrahmen (23) mittels einer Zugvorrichtung (34) in Maschinenlängsrichtung (40) im Luftspalt (32) zwischen einem Eisenkörper (18) und einem Rotorkörper (31) verfahrbar ist.

5. Vorrichtung (1) nach Anspruch 3,
dadurch gekennzeichnet,
dass am Trägerrahmen (23) eine Videoeinrichtung (24, 25, 26, 27, 42, 43, 44, 45) angeordnet ist.

6. Vorrichtung (1) nach Anspruch 5,
dadurch gekennzeichnet,
dass die Videoeinrichtung (24, 25, 26, 27, 42, 43, 44, 45) im wesentlichen aus Kameras (24, 42) und Spiegeln (26, 44) besteht.

7. Vorrichtung nach Anspruch 4,
dadurch gekennzeichnet,
dass die Zugvorrichtung (34) ausserhalb des Luftspaltes (32) an Trägersupporte (35) führt, die ihrerseits an einem bezüglich einer Welle (41) des Rotorkörpers (31) rotationssymmetrischen Maschinenteil (36), vorzugsweise dem Maschinenlüfter oder auf der Welle selbst, in Umfangsrichtung (38) fahrbar angeordnet sind.

## Claims

1. Device (1) for pressing in slot-sealing pieces (12, 14) for winding bars (20) inserted into the slots (21) of an iron body (18) of an electric machine, a slot-sealing piece consisting of a first, upper prismatic body (12) on whose underside a surface (16) extends in an inclined fashion, and a second, lower prismatic body (14) whose upper surface (15), facing the upper body (12), extends in an inclined fashion parallel to the inclination of the lower surface (16) of the upper body (12), a plunger (8) acting on an end face (13) of the second prismatic body (14) and being connected to a force-generating device (4), characterized in that the force-generating device (4) is arranged in a collet (2) which engages with a cam (3) on the first prismatic body (12).

2. Device (1) according to Claim 1, characterized in that the force-generating device (4) consists of a pressure cylinder (6) with a hydraulically or pneumatically operable piston (5) and to whose linkage (7) the plunger (8) is connected.

3. Device (1) according to Claim 1, characterized in that it is connected by means of a lifting device (22) to a support frame (23), and in that there are arranged on the support frame (23) mounts (28) which are provided with permanent magnets (29) and rollers (30).

4. Device (1) according to Claim 3, characterized in that the support frame (23) can be moved by means of a pulling device (34) in the longitudinal direction (40) of the machine in the air gap (32) between an iron body (18) and a rotor body (31).

5. Device (1) according to Claim 3, characterized in that a video apparatus (24, 25, 26, 27, 42, 43, 44, 45) is arranged on the support frame (23).

6. Device (1) according to Claim 5, characterized in that the video apparatus (24, 25, 26, 27, 42, 43, 44, 45) consists essentially of cameras (24, 42) and mirrors (26, 44).

7. Device according to Claim 4, characterized in that the pulling device (34) leads outside the air gap (32) on the supports (35) which, for their part, are arranged, such that they can be moved in the circumferential direction (38), on a machine part (36) which is rotationally symmetrical with respect to a shaft (41) of the rotor body (31), preferably the machine fan or on the shaft itself.

## Revendications

1. Dispositif (1) pour introduire des cales de fermeture d'encoche (12, 14) pour des barres d'enroulement (20) logées dans les encoches (21) d'un corps en fer (18) d'une machine électrique, dans lequel une cale de fermeture d'encoche se compose d'un premier corps prismatique supérieur (12) à la surface inférieure duquel une face (16) s'étend de manière inclinée, et d'un deuxième corps prismatique inférieur (14), dont la surface supérieure (15) tournée vers le corps supérieur (12) s'étend par rapport à l'inclinaison de la face inférieure (16) du corps supérieur (12) de manière inclinée parallèlement, une matrice (8) venant en prise avec une surface frontale (13) du deuxième corps prismatique (14) et étant connectée à un dispositif de génération d'énergie (4), caractérisé en ce que le dispositif de génération d'énergie (4) est disposé dans une pince de serrage (2) qui vient en prise avec une saillie (3) sur le premier corps prismatique (12).

2. Dispositif (1) selon la revendication 1, caractérisé en ce que le dispositif de génération d'énergie (4) se compose d'un vérin hydraulique (6) avec un piston (5) actionnable hydrauliquement ou pneumatiquement, à la tige (7) duquel est connectée la matrice (8) .

3. Dispositif (1) selon la revendication 1, caractérisé en ce qu'il est connecté au moyen d'un dispositif de levage (22) à un cadre porteur (23), et en ce que sur le cadre porteur (23) sont disposés des supports (28) qui sont pourvus d'aimants permanents (29) et de galets (30).

4. Dispositif (1) selon la revendication 3, caractérisé en ce que le cadre porteur (23) peut être déplacé au moyen d'un dispositif de traction (34) dans la direction longitudinale de la machine (40) dans l'entrefer (32) entre un corps en fer (18) et un corps de rotor (31).

5. Dispositif (1) selon la revendication 3, caractérisé en ce que sur le cadre porteur (23) est disposé un dispositif vidéo (24, 25, 26, 27, 42, 43, 44, 45).

6. Dispositif (1) selon la revendication 5, caractérisé en ce que le dispositif vidéo (24, 25, 26, 27, 42, 43, 44, 45) se compose essentiellement de caméras (24, 42) et de miroirs (26, 44).

7. Dispositif selon la revendication 4, caractérisé en ce que le dispositif de traction (34) conduit, en dehors de l'entrefer (32) sur les supports porteurs (35), qui sont disposés pour leur part de manière déplaçable dans la direction périphérique (38) sur une pièce de machine (36) à symétrie de révolution par rapport à un arbre (41) du corps de rotor (31), de préférence sur le ventilateur de la machine ou sur l'arbre lui-même.
